# EUROPEAN PATENT SPECIFICATION

(11) **EP 1 927 482 B1**
(45) Date of publication and mention of the grant of the patent: **25.08.2010**
(21) Application number: 07254624.5
(22) Date of filing: 29.11.2007
(51) Int. Cl.: B60C 25/125

(54) **Apparatus for breaking the seal between a tyre bead of a tyre and a wheel rim of a wheel**
Vorrichtung zur Brechung der Versiegelung zwischen einem Reifenwulst und einer Reifenfelge
Appareil pour démonter le joint entre le talon d'un pneu et la jante de la roue

(30) Priority: 30.11.2006 GB 0623967
(43) Date of publication of application: 04.06.2008
(73) Proprietor: Haffenden, Guy Roger, 11 Mill Lane East Hoathly East Sussex BN8 6QB (GB)
(72) Inventor: Haffenden, Guy Roger, 11 Mill Lane East Hoathly East Sussex BN8 6QB (GB)
(74) Representative: Jones, Graham Henry

(56) References cited:
- GB-A- 1 094 919
- GB-A- 2 350 590

## Description

This invention relates to apparatus for breaking the seal between a tyre bead of a tyre and a wheel rim of a wheel.

There are various known types of apparatus for breaking the seal between a tyre bead of a tyre and a wheel rim of a wheel. According to the preamble of claim 1 GB-A-2350590 and GB-A-1094919 show two types of known apparatus for breaking the seal between a tyre bead of a tyre and a wheel rim of a wheel. Both types of apparatus have a seal-breaking device, and a mounting frame for mounting the seal-breaking device on a wheel. The various known types of apparatus often cause problems when the wheel is a commercial vehicle wheel. The known types of apparatus for use with a commercial vehicle wheel are often fiddly, inadequate, noisy, expensive, and dependent upon an external power source.

It is an aim of the present invention to reduce the above mentioned problems.

Accordingly, the present invention provides apparatus for breaking the seal between a tyre bead of a tyre and a wheel rim of a wheel, which apparatus comprises a mounting frame for mounting a seal-breaking device, the mounting frame comprising first connector means for enabling the mounting frame to be connected to the wheel, and second connector means for enabling the seal-breaking device to be connected to the mounting frame, and **characterised in that** the mounting frame comprises a pair of spaced apart side plates and a plurality of spaced apart locator formations on each of the side plates and for locating the second connector means, whereby the apparatus is such that the seal-breaking device is connectable to the mounting frame such as correctly to locate the seal-breaking device with respect to the wheel rim and allow the seal-breaking device to break the seal by displacing the tyre bead from the wheel rim irrespective of differing wheel formations forming part of different types of wheel.

The apparatus of the present invention is advantageous in that it is able correctly to locate the seal-breaking device with respect to the wheel rim, and allow the seal-breaking device to break the seal by displacing the tyre bead from the wheel rim irrespective of the location of wheel formations on the wheel. Various types of wheel, especially commercial vehicle wheels, have various types of wheel formations which are on the wheel and which often obstruct the use of the known types of apparatus. For example, many commercial vehicle wheels are such that one of the wheel formations is a tapered circumference of the vehicle wheel rim. The apparatus of the present invention is especially useful for displacing tyres from such commercial vehicle wheels and the tapered circumference of the wheel rim does not present a problem. Also by way of example, many commercial vehicle wheels have a continuous inner ridge, hump or groove around the wheel rim to retain the tyre bead seating when the tyre is punctured, impacted or deflated. The apparatus of the present invention may also be used on wheels designed to have a low pressure type tyre system, for example having the above mentioned inner ridge, hump or groove. The ridge, hump or groove may be continuous, interrupted or a combination thereof. The ridge, hump or groove is usually on the side of the wheel to which the valve is located, which is usually the mounting flange or nave side of the wheel. Such wheels are often known as EVA (external valve aperture) or EVH (external valve hole) wheels. The apparatus of the present invention may be used on this type of commercial wheels, whereas the known types of apparatus often encounter problems. More specifically, the shape of the apertures provides primary location for the seal-breaking device or adaptor within the apparatus, especially with regard to pulling out of the front of the apparatus when the seal-breaking devices are under load. The shape of the apertures is also relevant in that the shape provides side-to-side location as well as fore-and-aft location.

Also by way of example, it is mentioned that some wheels have a ridge on the side of the wheel away from the nave and the valve. Most types of known apparatus are unable to be used with such wheels. The apparatus of the present invention is able to be used with such wheels.

Also by way of example, most articulated lorry trailer wheels have mounting flange positions inset, or on or near the centre line of the wheel. This causes problems with many known types of apparatus whereas there is no problem with the apparatus of the present invention.

The apparatus of the present invention is advantageous in that it is usually able to be secured to the wheel without the need for fixing bolts.

The apparatus of the present invention may be used with most common types of 8 or 10 stud mounted wheels, for example commercial wheels or wheels of other vehicles. The apparatus of the present invention may also be use with 6 stud mounted wheels.

The apparatus of the present invention may be such that the seal-breaking device is connectable to the mounting frame at a constant depth with respect to the wheel rim and thus at a different depth with respect to the first connector means.

The locator formations may be, for example, apertures or lugs. Other types of locator formations may be employed. When the locator formations are apertures, the apertures may be in-line apertures. Other layouts for the apertures may be employed. The apertures, for example the in-line apertures, may be in a front edge of each side plate.

The apparatus may be one in which the first connector means is a direct connection to the wheel. Alternatively, the apparatus may be one in which the first connector means is an indirect connection to the wheel, and in which the apparatus includes first adaptor means for providing the indirect connection. Various designs for the first adaptor means may be employed providing the required indirect connection is achieved.

The apparatus may be one in which the second connector means provides a direct connection to the seal-breaking device. Alternatively, the apparatus may be one in which the second connector means provides an indirect connection to the seal-breaking device, and in which the apparatus includes second adaptor means for providing the indirect connection. Various designs for the second adaptor means may be employed providing the required indirect connection is achieved.

When the second connector means is an indirect connection to the seal-breaking device, then the second connector means may be shaped to allow movement of the second adaptor means relative to the mounting frame so that unequal or point loads are able to be avoided or reduced during use of the apparatus. The second adaptor means may be a trunion plate assembly.

The apparatus of the present invention may include a retaining member for retaining the second adaptor means in position. The retaining member may be a retaining bar or any other suitable and appropriate device.

When the apparatus of the present invention is used with six stud mounting wheels, then the apparatus may advantageously include the first adaptor means for providing the indirect connection of the first connector means to the wheel. The first adaptor means may allow a range of attachment fittings to be accommodated. The use of the first adaptor means may also enable the apparatus of the invention to be used on other types of wheels, for example agricultural machine wheels, or other low pressure wheels, especially those having the above mentioned continuous ridge or hump around the wheel rim to retain the tyre bead seating.

The side plates may be provided with holes for reducing the weight of the side plates.

The mounting frame may have an open front which faces the wheel rim at the point where the seal is to be broken during use of the apparatus.

The mounting frame may have a rear wall comprising a plurality of cross members, each cross member having a cross member formation which forms part of the second connector means. The cross member formation may comprise a slot for receiving an arm part of the seal-breaking device.

The apparatus may include a retaining bar along an outer face of each one of the side plates, the retaining bar being for helping to retain the seal-breaking device in the locator formations in the side plates. The retaining bar may also provide added strength for the apparatus.

The apparatus of the present invention may be one in which the mounting frame is of other constructions to those mentioned above. Thus, for example, the frame may have side plates which are not provided with holes and/or a different type of rear wall may be employed.

The apparatus may be one in which the first connector means comprising a slot arrangement for receiving a wheel flange of the wheel.

The slot arrangement may comprise a pair of slots provided in each of the side plates.

The first connector means may include a transverse plate which extends between the side plates and which may locate with a wheel flange or is used as an attachment point or locator for a wheel flange, first connector means adaptors, spacers, or force transfer members. The first connector means adaptors may be provided with a hole or other suitable retaining means for securing the apparatus, a force transfer plate, or adaptors to the wheel flange.

The apparatus of the present invention may include receiving means for receiving a force transfer member for transferring twisting forces generated during use of the apparatus. The force transfer member may be a force transfer plate. Other types of force transfer member may be employed.

The receiving means may be one or more of holes, slots, lugs, notches, pins or other suitable and appropriate devices or formations.

The apparatus of the invention may include the seal-breaking device. Any suitable and appropriate seal-breaking device may be employed, however powered.

Preferably, the seal-breaking device comprises a threaded member which is manually operated in use of the apparatus, and a pressure plate at one end of the threaded member, the threaded member being such that when it is manually screwed through a mounting part of the seal-breaking device, then the pressure plate exerts pressure on the tyre bead and breaks the seal.

The apparatus of the invention may include articulation control means. The articulation control means may be a bolt or a bi-directional thrust member and may act upon elements or parts of a force transfer frame which is flexibly located upon and is typically part of the second adaptor means.

The apparatus of the invention may be one in which the mounting frame comprises two or more modular interconnectable sections.

Embodiments of the invention will now be described solely by way of example and with reference to the accompanying drawings in which:
Figure 1 is a perspective view from the rear, above and one side of first apparatus of the invention, the apparatus comprising a mounting frame and a seal-breaking device;
Figure 2 is a perspective view from the front and one side of second apparatus of the invention, the apparatus comprising a mounting frame which is like the mounting frame shown in Figure 1 but which has been modified;
Figure 3 shows third apparatus of the invention, the apparatus being like the second apparatus of Figure 2 but with alternative first connector means;
Figure 4 is a perspective view from the front, one side and above of fourth apparatus of the present invention, the apparatus comprising the mounting frame shown in Figure 1 and a different make of seal-breaking device to that shown in Figure 1; and
Figure 5 is a perspective view from the front, one side and above of fifth apparatus of the present invention, the apparatus comprising the mounting frame shown in Figure 1, and a different type of seal-breaking device to that shown in Figure 1.

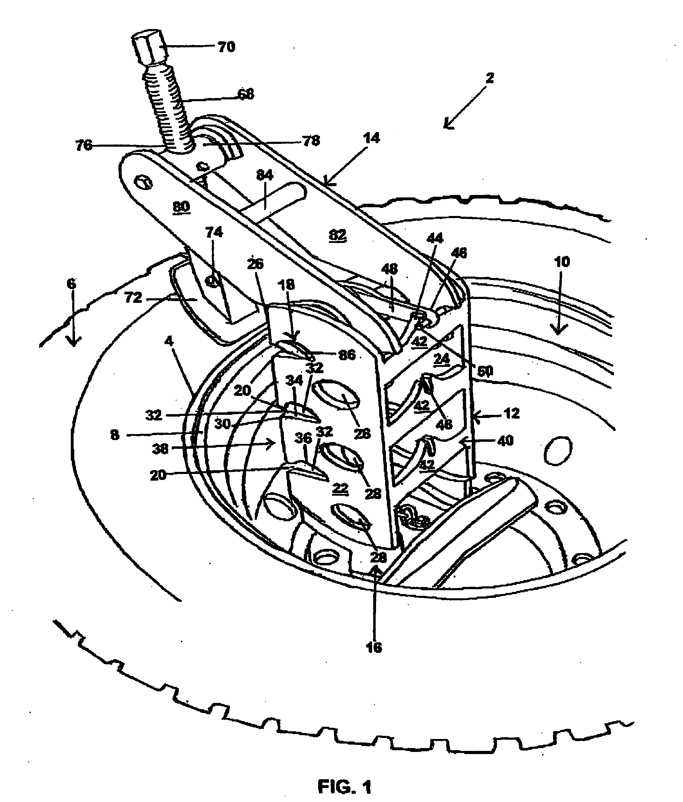

Referring to Figure 1, there is shown apparatus 2 for breaking the seal between a tyre bead 4 of a tyre 6 and a wheel rim 8 of a wheel 10. The apparatus 2 comprises a mounting frame 12 for mounting a seal-breaking device 14.

The mounting frame 12 comprises first connector means 16 for enabling the mounting frame 12 to be connected to the wheel 10. The mounting frame 12 also comprises second connector means 18 for enabling the seal-breaking device 14 to be connected to the mounting frame 12.

The second connector means 18 comprises a plurality of spaced apart apertures 20. Each aperture 20 is for enabling the seal-breaking device 14 to be connected to the mounting frame 12 at a similar depth with respect to the wheel rim 8, and thus at a different depth with respect to the first connector means 16. This enables the correct location of the seal-breaking device 14 with respect to the wheel rim 8. This also allows the seal-breaking device 14 to break the seal by displacing the tyre bead 4 from the wheel rim 8 irrespective of differing wheel formations forming part of different types of wheel. The apparatus 2 is thus able to take into account of the fact that wheels come in a variety of designs with various formations such for example a continuous ridge or hump around the wheel rim 8 to retain the tyre bead seating, or a ridge on the side of the wheel 10 away from the nave and the valve of the wheel 10, or mounting flange positions inset, or on or near a centre line of the wheel 10. The apparatus 2 of the present invention is able to be used with wheels having these different formations, whereas many types of known apparatus are not suitable for wheels having one or more of the various types of formations such as those mentioned above.

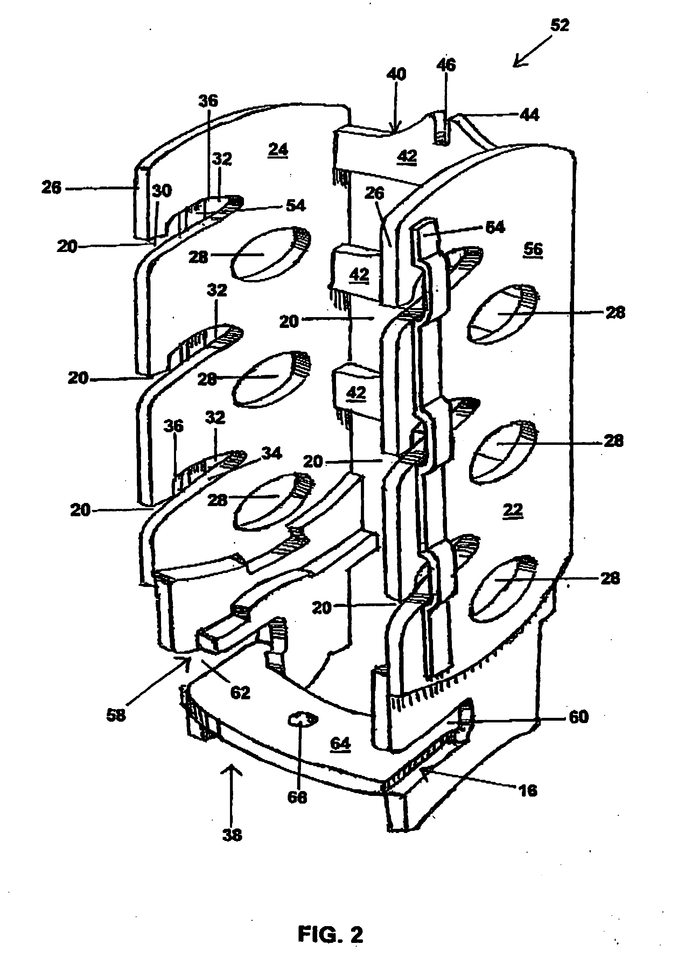

The first connector means 16 is most clearly shown in Figure 2. The first connector means 16 is a direct connection to the wheel 10. In an alternative embodiment of the invention (not shown) the first connector means 16 may be an indirect connection to the wheel 10, in which case the apparatus 2 may include first adaptor means for providing the indirect connection.

As shown in Figure 1, the second connector means 18 provides an indirect connection to the seal-breaking device 14. In an alternative embodiment of the invention, the second connector means may provide a direct connection to the seal-breaking device 14, in which case the apparatus 2 may include second adaptor means for providing the indirect connection. The second connector means may then advantageously be shaped to allow movement of the second adaptor means relative to the mounting frame 12, so that unequal or point loads are able to be avoided or reduced during use of the apparatus 2. The second adaptor means may be a trunion plate assembly or any other suitable and appropriate device.

Where the apparatus 2 includes the second adaptor means, then a retaining member may be employed for retaining the second adaptor means in position. The retaining member may be a retaining bar or any other suitable and appropriate device.

As can be seen from Figures 1 and 2, the apertures 20 are in-line apertures 20. The mounting frame comprises a pair of spaced apart side plates 22, 24. A front edge 26 of each side plate 22, 24 has the apertures 20. The side plates 22. 24 are provided with holes 28 for reducing the weight of the side plates, 22, 24. The holes 28 may be omitted in an alternative design of the apparatus 2.

The apertures 20 are shaped as shown so that they have a neck part 30 which opens out into a larger part 32. The larger part 32 has a substantially flat lower edge 34 and a curved upper edge 36.

The mounting frame 12 has an open front 38 which faces the wheel rim 8 at the point where the seal is to be broken during use of the apparatus 2.

The mounting frame 12 has a rear wall 40 comprising a plurality of cross members 42. Each cross member 42 has a formation 44, which forms part of the second connector means 18, The cross members 42 receive the counter-force set up by the seal-breaking device 14 when the apparatus of the invention is in use, The cross members 42 form structural elements. Also, the cross members 42 take the counter-force generated by the seal-breaking device 14, as well as providing a visible second securing point for the seal-breaking device 14 and adaptors. Preferably, the numbers of cross members 42 is at least as many as there are sets of apertures 20.

As shown in Figures 1 and 2, the formation 44 comprises a slot 46 for receiving an arm part 48 of the seal-breaking device 14, or a second adaptor. The arm part 48 is held in position by a pin 50 as shown in Figure 1. The arm part 48 may be part of a second adaptor means in the form of a trunion assembly.

Figure 2 shows a mounting frame 52 which is the same as the mounting frame 12 except that the mounting frame 52 is provided with a retaining bar 54 along an outer face 58 of each one of the side plates 22, 24.

As best seen from Figure 2, the first connector means 16 comprises a slot arrangement 58 comprising a pair of slots 60, 62 provided one in each of the side plates 22, 24 respectively. The first connector means 16 also comprises a transverse plate 64 which extends between the side plates 22, 24. The transverse plate 64 has an aperture 66 for securing the apparatus, a force transfer plate, or adaptor to be the wheel flange. The slotted-type first connector means 16 is ideal for use on 8 - 10 stud commercial vehicle wheels.

Figure 1 shows the apparatus 2 having a seal-breaking device 14 comprising a threaded member 68 which is manually operated by means of a nut 70 and an appropriate spanner or other turning device (not shown). The seal-breaking device 14 has a pressure plate 72 at an end of the threaded member 78 opposite the nut 70. The pressure plate 72 is pivotally mounted by a pivot 74. The threaded member 68 screws through a threaded aperture 76 in a bar 78 which extends between a pair of side plates 80, 82. A bar 84 helps to keep the side plates 80, 82 apart.

Each side of the seal-breaking device 14 is provided with a crescent-shaped member 86 which locates in its appropriate aperture 20 as shown in Figure 1. The seat-breaking device 14 is securely located by the members 14 to the mounting frame 12 as pressure is exerted by the pressure plate 22 in order to break the seal between the tyre bead 4 and the wheel rim 8. This pressure increases as the threaded member 68 is screwed through the bar 78.

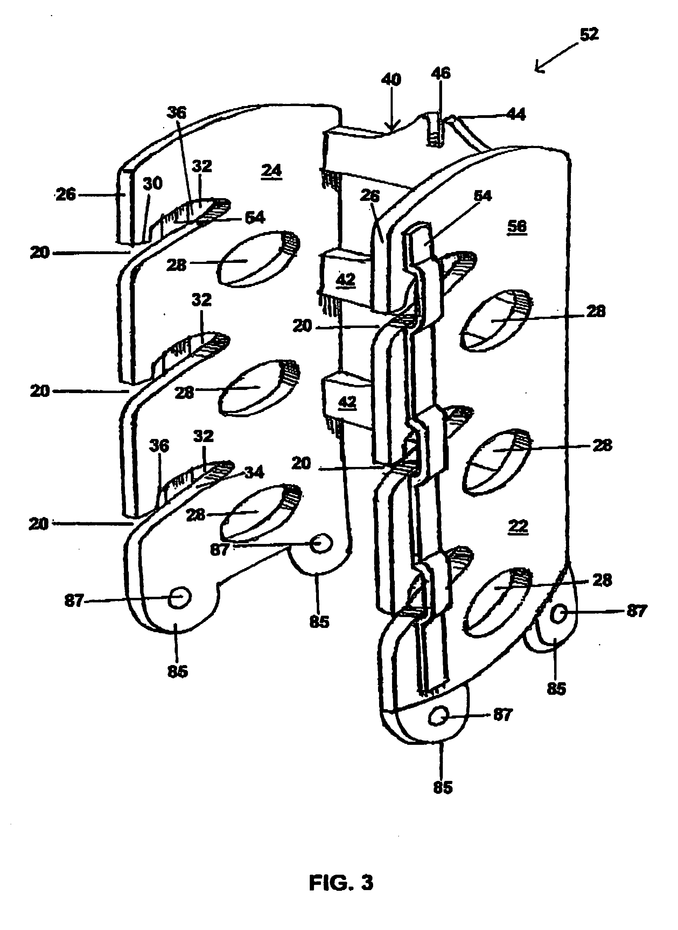

Figure 3 shows the apparatus 52 of Figure 2 but with the first connector means 16 removed and replaced by lugs 85 with holes 87. The lugs 85 and the holes 87 are for receiving adaptor means.

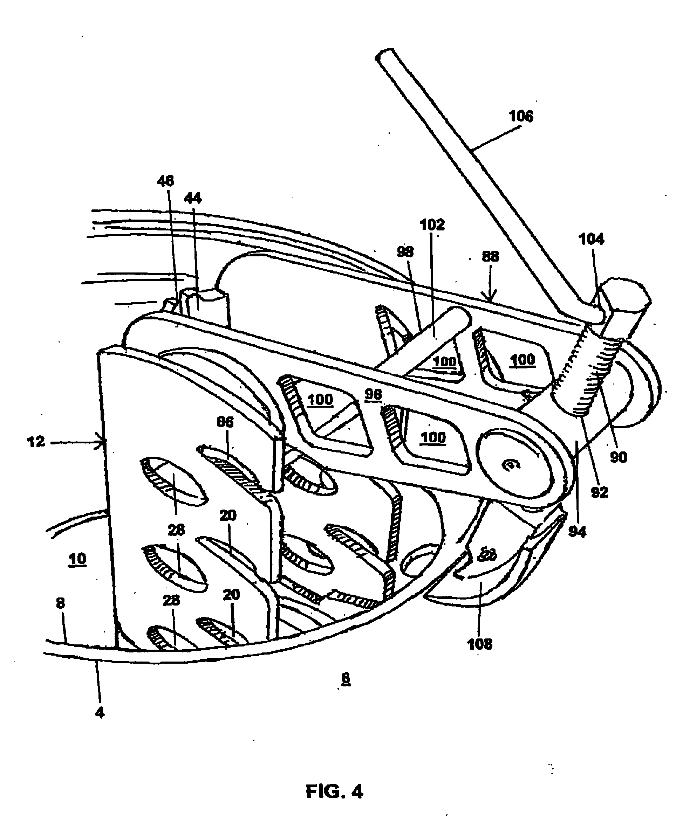

Figure 4 shows the mounting frame 12 of Figure 1 with a seal-breaking device 88 which is a known seal breaking device. This illustrates the versatility of the mounting frame 12. The seal breaking device 88 has a threaded member 90 which screws through a threaded aperture 92 in a bar 94. The bar 94 extends between side plates 96, 98. The side plates 96, 98 are provided with apertures 100 for lightening the weight of the side plates 96, 98 and therefore the entire seal-breaking device 88. The side plates 96, 98 are also kept apart by a bar 102. The threaded member 90 has an aperture 104 for receiving a bar 106 which enables the threaded member 90 manually to be screwed into and out of the threaded aperture 92 in the bar 94.

The threaded member 90 terminates at its end remote from the aperture 104 in a pressure plate 108 which is more curved than the pressure plate 72 in the seal-breaking device 14.

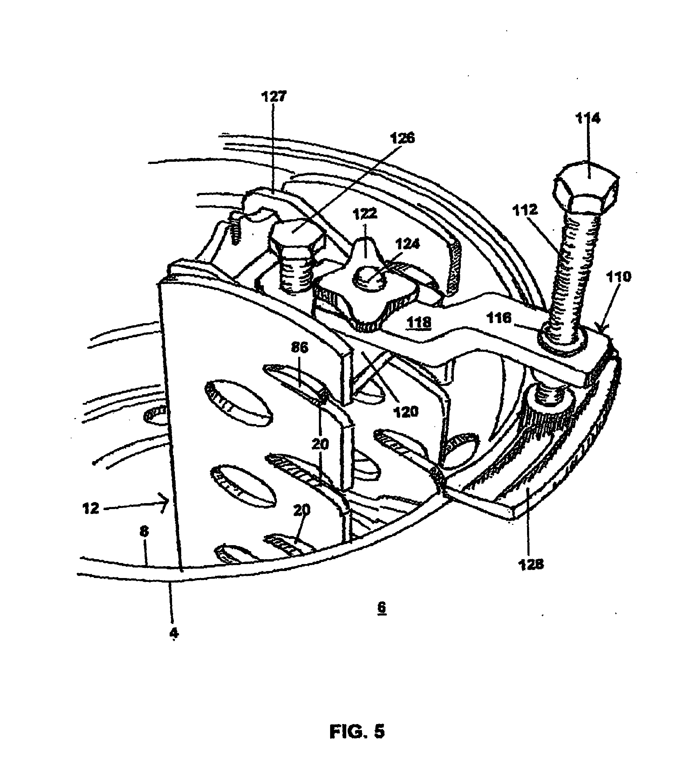

Figure 5 shows the mounting frame 12 provided with a seal-breaking device 110. The seal-breaking device 110 has a threaded member 112 having a nut 114 at one end for enabling the threaded member 112 manually to be screwed through a threaded aperture 116 In a radially extending bar 118. The threaded member 112 applies force to a pressure plate 128 and tyre bead. The bar 118 is located on a plate 120 by a hand nut 122 being screwed over a threaded member 124. A captive bolt 126 or similar is used to control the arc of the plate 120 and the member 86 within the slot or aperture 20 by reacting with a force transfer frame 127. Thus, the bolt 126 or a similar bi-directional thrust member acts to provide articulation control, and may typically be part of the second adaptor means. This type of seal-breaking device 110 has no inherent facility to adjust the angle of presentation or to follow the tapered wheel profile. This type of seal-breaking device 110 may benefit from angle adjustments provided by the captive bolt 126 acting on a connector bar bridging force transfer claws on the force transfer frame 127.

It is to be appreciated that the embodiments of the invention described above with reference to the accompanying drawings have been given by way of example and that modifications may be effected. Thus, for example, the apparatus as shown in the drawings may include receiving means for receiving a force transfer member for transferring twisting forces generated during use of the apparatus. The force transfer member may be a force transfer plate. The receiving means may be one or more of holes, slots, lugs, notches or pins. If desired, the apparatus of the invention may have only one locator formation, for example one locator aperture or lug. If this locator formation is at the position of the locator aperture which is shown in the drawings and which is furthest from the first connector means, then the seal-breaking device shown in the drawings can be used but with a longer threaded member than the illustrated threaded members 68, 90, 112. This longer threaded member would enable reaching down to the tyre/wheel interface. As shown in the drawings, the mounting frame is a single entity, which may be provided with adaptors and add-on members to enable the mounting frame to function as shown. If desired, the mounting frame used in the apparatus of the present invention may be made in two or more modular interconnectable sections which can be built up into a mounting frame of the desired length. Such a mounting frame made of two or more modular interconnectable sections would be able to have all the features, versatility and advantages of the illustrated single entity mounting frame, whilst utilising the same principles of quick assembly and force transfer within its own assembly means by which the two or more modular interconnectable sections are connected together.

## Claims

1. Apparatus (2) for breaking the seal between a tyre bead (4) of a tyre (6) and a wheel rim (8) of a wheel (10), which apparatus (2) comprises a mounting frame (12) for mounting a seal-breaking device (14), the mounting frame (12) comprising first connector means (16) for enabling the mounting frame (12) to be connected to the wheel (10), and second connector means (18) for enabling then seal-breaking device (14) to be connected to the mounting frame (12), which comprises a pair of spaced apart side plates (22, 24)
**characterised in that** the mounting frame (12) comprises a plurality of spaced apart locator formations (20) on each of the side plates (22, 24) and for locating the second connector means (18), whereby the apparatus (2) is such that the seal-breaking device (14) is connectable to the mounting frame (12) such as correctly to locate the seal-breaking device (14) with respect to the wheel rim (8) and allow the seal-breaking device (14) to break the seal by displacing the tyre bead (4) from the wheel rim (8) irrespective of differing wheel formations forming part of different types of wheel (10).

2. Apparatus (2) according to claim 1 in which the apparatus (2) is such that the seal-breaking device (14) is connectable to the mounting frame (12) at a constant depth with respect to the wheel rim (8) and thus at a different depth with respect to the first connector means (18).

3. Apparatus (2) according to claim 1 or claim 2 in which the locator formations (20) are apertures (20).

4. Apparatus (2) according to claim 3 in which the apertures (20) are in-line apertures (20).

5. Apparatus (2) according to claim 3 or claim 4 in which the apertures (20) are in a front edge (26) of each side plate (22, 24).

6. Apparatus according to claim 1 or claim 2 in which the locator formations are lugs.

7. Apparatus (2) according to any one of the preceding claims in which the first connector means (16) is a direct connection to the wheel (10).

8. Apparatus (2) according to any one of claims 1 - 6 in which the first connector means (16) is an indirect connection to the wheel (10), and in which the apparatus (2) includes first adaptor means for providing the indirect connection.

9. Apparatus (2) according to any one of the preceding claims in which the second connector means (18) provides a direct connection to the seal-breaking device (14).

10. Apparatus (2) according to any one of claims 1 - 8 in which the second connector means (18) provides an indirect connection to the seal-breaking device (14), and in which the apparatus (2) includes second adaptor means for providing the indirect connection.

11. Apparatus (2) according to claim 10 In which the second connector means (16) is shaped to allow movement of the second adaptor means relative to the mounting frame (12) so that unequal or point loads are able to be avoided or reduced during use of the apparatus (2).

12. Apparatus (2) according to claim 10 or claim 11 in which the second adaptor means is a trunion plate assembly.

13. Apparatus (2) according to any one of claims 10 - 12 and including a retainer member for retaining the second adaptor means in position.

14. Apparatus (2) according to claim 13 in which the retainer member is a retaining bar.

15. Apparatus (2) according to any one of the preceding claims in which the side plates (22, 24) are provided with holes (28) for reducing the weight of the side plates (22, 24).

16. Apparatus (2) according to any one of the preceding claims in which the mounting frame (12) has an open front (38) which faces the wheel rim (8) at the point where the seal is to be broken during use of the apparatus (2).

17. Apparatus (2) according to any one of the preceding claims in which the mounting frame (12) has a rear wall (40) comprising a plurality of cross members (42), and in which each cross member (42) has a cross member formation (44) which forms part of the second connector means (18).

18. Apparatus (2) according to claim 17 in which the cross member formation (44) comprises a slot (46) for receiving an arm part (48) of the seal-breaking device (14).

19. Apparatus (2) according to any one of the preceding claims and including a retaining bar along an outer face of each one of the side plates (22, 24), the retaining bar being for helping to retain the seal-breaking device (14) in the locator formations (20) in the side plates (22, 24).

20. Apparatus (2) according to any one of the preceding claims in which the first connector means (16) comprises a slot arrangement (58) for receiving a wheel flange of the wheel (10).

21. Apparatus (2) according to claim 20 in which the slot arrangement (58) comprises a pair of slots (60, 62) provided one in each of the side plates (22,24).

22. Apparatus (2) according to any one of the preceding claims in which the first connector means (16) includes a transverse plate (64) which extends between the side plates (22, 24).

23. Apparatus (2) according to claim 22 in which the transverse plate (64) has an aperture (66).

24. Apparatus (2) according to any one of the preceding claims and including receiving means for receiving a force transfer member for transferring twisting forces generated during use of the apparatus (2).

25. Apparatus (2) according to claim 24 in which the force transfer member is a force transfer plate.

26. Apparatus (2) according to claim 24 or claim 25 in which the receiving means are one or more of holes, slots, lugs, notches or pins.

27. Apparatus (2) according to any one of the preceding claims and including the seal-breaking device (14).

28. Apparatus (2) according to claim 27 in which the seal-breaking device (14) comprises a threaded member (68) which is manually operated in use of the apparatus (2), and a pressure plate (72) at one end of the threaded member (68), the threaded member (68) being such that when it is manually screwed through a mounting part of the seal-breaking device (14), then the pressure plate (72) exerts pressure on the tyre bead (4) and breaks the seal.

29. Apparatus (2) according to any one of the preceding claims and including articulation control means.

30. Apparatus (2) according to any one of the preceding claims in which the mounting frame (12) comprises two or more modular interconnectable sections.

## Patentansprüche

1. Vorrichtung (2) zum Brechen der Versiegelung zwischen einem Reifenwulst (4) eines Reifens (6) und einer Radfelge (8) eines Rads (10), wobei die Vorrichtung (2) einen Montagerahmen (12) zum Montieren einer Versiegelungsbrechvorrichtung (14) umfasst, wobei der Montagerahmen (12) ein erstes Verbindermittel (16), damit der Montagerahmen (12) mit dem Rad (10) verbunden werden kann, und ein zweites Verbindermittel (18) umfasst, damit die Versiegelungsbrechvorrichtung (14) mit dem Montagerahmen (12) verbunden werden kann, der ein Paar beabstandeter Seitenplatten (22, 24) umfasst, **dadurch gekennzeichnet, dass** der Montagerahmen (12) mehrere beabstandete Positionsgeberausbildungen (20) an jeder der Seitenplatten (22, 24) zum Positionieren des zweiten Verbindermittels (18) umfasst, wobei die Vorrichtung (2) derart ist, dass die Versiegelungsbrechvorrichtung (14) mit dem Montagerahmen (12) verbindbar ist, um die Versiegelungsbrechvorrichtung (14) bezüglich der Radfelge (8) korrekt zu positionieren und damit die Versiegelungsbrechvorrichtung (14) unabhängig von unterschiedlichen Radausbildungen, die Teil unterschiedlicher Arten von Rädern (10) bilden, die Versiegelung durch Abdrücken des Reifenwulstes (4) von der Radfelge (8) brechen kann.

2. Vorrichtung (2) nach Anspruch 1, wobei die Vorrichtung (2) derart ist, dass die Versiegelungsbrechvorrichtung (14) in einer konstanten Tiefe mit Bezug auf die Radfelge (8) und somit in einer anderen Tiefe mit Bezug auf das erste Verbindermittel (16) mit dem Montagerahmen (12) verbindbar ist.

3. Vorrichtung (2) nach Anspruch 1 oder 2, wobei die Positionsgeberausbildungen (20) Öffnungen (20) sind.

4. Vorrichtung (2) nach Anspruch 3, wobei die Öffnungen (20) linear angeordnete Öffnungen (20) sind.

5. Vorrichtung (2) nach Anspruch 3 oder 4, wobei die Öffnungen (20) in einem Vorderrand (26) jeder Seitenplatte (22, 24) sind.

6. Vorrichtung nach Anspruch 1 oder 2, wobei die Positionsgeberausbildungen Nasen sind.

7. Vorrichtung (2) nach einem der vorhergehenden Ansprüche, wobei das erste Verbindermittel (16) eine direkte Verbindung zum Rad (10) ist.

8. Vorrichtung (2) nach einem der Ansprüche 1 - 6, wobei das erste Verbindermittel (16) eine indirekte Verbindung zum Rad (10) ist und wobei die Vorrichtung (2) ein erstes Adaptermittel zur Bereitstellung der indirekten Verbindung aufweist.

9. Vorrichtung (2) nach einem der vorhergehenden Ansprüche, wobei das zweite Verbindermittel (18) eine direkte Verbindung zur Versiegelungsbrechvorrichtung (14) bereitstellt.

10. Vorrichtung (2) nach einem der Ansprüche 1 - 8, wobei das zweite Verbindermittel (18) eine indirekte Verbindung zur Versiegelungsbrechvorrichtung (14) bereitstellt und wobei die Vorrichtung (2) ein zweites Adaptermittel zur Bereitstellung der indirekten Verbindung aufweist.

11. Vorrichtung (2) nach Anspruch 10, wobei das zweite Verbindermittel (18) so geformt ist, dass eine Bewegung des zweiten Adaptermittels bezüglich des Montagerahmens (12) gestattet wird, so dass ungleiche oder Punktlasten während des Gebrauchs der Vorrichtung (2) vermieden oder verringert werden können.

12. Vorrichtung (2) nach Anspruch 10 oder 11, wobei das zweite Adaptermittel eine Schwenkplattenanordnung ist.

13. Vorrichtung (2) nach einem der Ansprüche 10 - 12, einschließlich eines Halteelements, um das zweite Adaptermittel in Position zu halten.

14. Vorrichtung (2) nach Anspruch 13, wobei das Halteelement eine Haltestange ist.

15. Vorrichtung (2) nach einem der vorhergehenden Ansprüche, wobei die Seitenplatten (22, 24) zur Verringerung des Gewichts der Seitenplatten (22, 24) mit Löchern (28) versehen sind.

16. Vorrichtung (2) nach einem der vorhergehenden Ansprüche, wobei der Montagerahmen (12) eine offene Vorderseite (38) hat, die der Radfelge (8) an der Stelle gegenüberliegt, an der die Versiegelung während des Gebrauchs der Vorrichtung (2) zu brechen ist.

17. Vorrichtung (2) nach einem der vorhergehenden Ansprüche, wobei der Montagerahmen (12) eine Rückwand (40) mit mehreren Querelementen (42) hat und wobei jedes Querelement (42) eine Querelementausbildung (44) hat, die Teil des zweiten Verbindermittels (18) bildet.

18. Vorrichtung (2) nach Anspruch 17, wobei die Querelementausbildung (44) einen Schlitz (46) zur Aufnahme eines Armteils (48) der Versiegelungsbrechvorrichtung (14) umfasst.

19. Vorrichtung (2) nach einem der vorhergehenden Ansprüche und einschließlich einer Haltestange entlang einer Außenfläche jeder der Seitenplatten (22, 24), wobei die Haltestange dazu dient, zum Halten der Versiegelungsbrechvorrichtung (14) in den Positionsgeberausbildungen (20) in den Seitenplatten (22, 24) beizutragen.

20. Vorrichtung (2) nach einem der vorhergehenden Ansprüche, wobei das erste Verbindermittel (16) eine Schlitzanordnung (58) zur Aufnahme eines Radflanschs des Rads (10) umfasst.

21. Vorrichtung (2) nach Anspruch 20, wobei die Schlitzanordnung (58) ein Paar Schlitze (60, 62) umfasst, die jeweils in jeder der Seitenplatten (22, 24) vorgesehen sind.

22. Vorrichtung (2) nach einem der vorhergehenden Ansprüche, wobei das erste Verbindermittel (16) eine Querplatte (64) aufweist, die sich zwischen den Seitenplatten (22, 24) erstreckt.

23. Vorrichtung (2) nach Anspruch 22, wobei die Querplatte (64) eine Öffnung (66) hat.

24. Vorrichtung (2) nach einem der vorhergehenden Ansprüche, und einschließlich eines Aufnahmemittels zur Aufnahme eines Krafttransferelements zum Transferieren von Verdrehkräften, die während des Gebrauchs der Vorrichtung (2) entstehen.

25. Vorrichtung (2) nach Anspruch 24, wobei das Krafttransferelement eine Krafttransferplatte ist.

26. Vorrichtung (2) nach Anspruch 24 oder 25, wobei das Aufnahmemittel ein/e oder mehrere Löcher, Schlitze, Nasen, Kerben oder Stifte ist.

27. Vorrichtung (2) nach einem der vorhergehenden Ansprüche, und einschließlich der Versiegelungsbrechvorrichtung (14).

28. Vorrichtung (2) nach Anspruch 27, wobei die Versiegelungsbrechvorrichtung (14) ein Gewindeelement (68), das beim Gebrauch der Vorrichtung (2) manuell bedient wird, und eine Druckplatte (72) an einem Ende des Gewindeelements (68) umfasst, wobei das Gewindeelement (68) derart ist, dass die Druckplatte (72) Druck auf den Reifenwulst (4) ausübt und die Versiegelung bricht, wenn das Gewindeelement (68) manuell durch ein Montageteil der Versiegelungsbrechvorrichtung (14) geschraubt wird.

29. Vorrichtung (2) nach einem der vorhergehenden Ansprüche, und einschließlich eines Anlenksteuermittels.

30. Vorrichtung (2) nach einem der vorhergehenden Ansprüche, wobei der Montagerahmen (12) zwei oder mehr modulare miteinander verbindbare Abschnitte umfasst.

## Revendications

1. Appareil (2) pour démonter le joint entre un talon de pneu (4) d'un pneu (6) et une jante de roue (8) d'une roue (10), lequel appareil (2) comprend un cadre de montage (12) pour monter un dispositif de démontage de joint (14), le cadre de montage (12) comprenant un premier moyen de connecteur (16) destiné à permettre de connecter le cadre de montage (12) à la roue (10), et un deuxième moyen de connecteur (18) destiné à permettre de connecter le dispositif de démontage de joint (14) au cadre de montage (12), lequel comprend une paire de plaques latérales espacées l'une de l'autre (22, 24), **caractérisé en ce que** le cadre de montage (12) comporte une pluralité de formations de positionnement espacées l'une de l'autre (20) sur chacune desdites plaques latérales (22, 24) qui servent à positionner le deuxième moyen de connecteur (18), l'appareil (2) étant ainsi conçu de telle sorte que le dispositif de démontage de joint (14) puisse être connecté au cadre de montage (12) de manière à positionner correctement le dispositif de démontage de joint (14) par rapport à la jante de roue (8) et à permettre au dispositif de démontage de joint (14) de démonter le joint en déplaçant le talon de pneu (4) par rapport à la jante de roue (8) indépendamment des formations de roue diverses qui font partie de différents types de roue (10).

2. Appareil (2) selon la revendication 1, dans lequel l'appareil (2) est conçu de telle sorte que le dispositif de démontage de joint (14) puisse être connecté au cadre de montage (12) à une profondeur constante par rapport à la jante de roue (8), et donc à une profondeur différente par rapport au premier moyen de connecteur (16).

3. Appareil (2) selon la revendication 1 ou la revendication 2, dans lequel les formations de positionnement (20) sont des ouvertures (20).

4. Appareil (2) selon la revendication 3, dans lequel les ouvertures (20) sont des ouvertures en ligne (20).

5. Appareil (2) selon la revendication 3 ou la revendication 4, dans lequel les ouvertures (20) sont formées dans un bord avant (26) de chaque plaque latérale (22, 24).

6. Appareil selon la revendication 1 ou la revendication 2, dans lequel les formations de positionnement sont des oreilles.

7. Appareil (2) selon l'une quelconque des revendications précédentes, dans lequel le premier moyen de connecteur (16) est en connexion directe avec la roue (10).

8. Appareil (2) selon l'une quelconque des revendications 1 à 6, dans lequel le premier moyen de connecteur (16) est en connexion indirecte avec la roue (10), et dans lequel l'appareil (2) comprend un premier moyen d'adaptateur pour établir la connexion indirecte.

9. Appareil (2) selon l'une quelconque des revendications précédentes, dans lequel le deuxième moyen de connecteur (18) établit une connexion directe avec le dispositif de démontage de joint (14).

10. Appareil (2) selon l'une quelconque des revendications 1 à 8, dans lequel le deuxième moyen de connecteur (18) établit une connexion indirecte avec le dispositif de démontage de joint (14), et dans lequel l'appareil (2) comprend un deuxième moyen d'adaptateur pour établir la connexion indirecte.

11. Appareil (2) selon la revendication 10, dans lequel le deuxième moyen de connecteur (1B) est configuré de manière à permettre le déplacement du deuxième moyen d'adaptateur par rapport au cadre de montage (12) de telle sorte que des charges inégales ou concentrées puissent être évitées ou réduites pendant l'utilisation de l'appareil (2).

12. Appareil (2) selon la revendication 10 ou la revendication 11, dans lequel le deuxième moyen d'adaptateur est un ensemble de plaque à pivot.

13. Appareil (2) selon l'une quelconque des revendications 10 à 12, comprenant un élément de retenue pour retenir le deuxième moyen d'adaptateur en position.

14. Appareil (2) selon la revendication 13, dans lequel l'élément de retenue est une barre de retenue.

15. Appareil (2) selon l'une quelconque des revendications précédentes, dans lequel les plaques latérales (22, 24) comportent des trous (28) pour réduire le poids des plaques latérales (22, 24).

16. Appareil (2) selon l'une quelconque des revendications précédentes, dans lequel le cadre de montage (12) présente un avant ouvert (38) qui fait face à la jante de roue (8) au point auquel le joint doit être démonté pendant l'utilisation de l'appareil (2).

17. Appareil (2) selon l'une quelconque des revendications précédentes, dans lequel le cadre de montage (12) présente une paroi arrière (40) comprenant une pluralité de traverses (42), et dans lequel chaque traverse (42) présente une formation de traverse (44) qui forme une partie du deuxième moyen de connecteur (18).

18. Appareil (2) selon la revendication 17, dans lequel la formation de traverse (44) comporte une fente (46) destinée à recevoir une partie de bras (48) du dispositif de démontage de joint (14).

19. Appareil (2) selon l'une quelconque des revendications précédentes, et comprenant une barre de retenue le long d'une face extérieure de chacune des plaques latérales (22, 24), la barre de retenue servant à aider à retenir le dispositif de démontage de joint (14) dans les formations de positionnement (20) dans les plaques latérales (22, 24).

20. Appareil (2) selon l'une quelconque des revendications précédentes, dans lequel le premier moyen de connecteur (16) comporte un arrangement de fentes (58) destinées à recevoir une flasque de roue de la roue (10).

21. Appareil (2) selon la revendication 20, dans lequel l'arrangement de fentes (58) comprend une paire de fentes (60, 62) formées l'une dans chacune des plaques latérales (22, 24).

22. Appareil (2) selon l'une quelconque des revendications précédentes, dans lequel le premier moyen de connecteur (16) comprend une plaque transversale (64) qui s'étend entre les plaques latérales (22, 24).

23. Appareil (2) selon la revendication 22, dans lequel la plaque transversale (64) comporte une ouverture (66).

24. Appareil (2) selon l'une quelconque des revendications précédentes, et comprenant un moyen de réception pour recevoir un élément de transfert de force pour transférer des forces de torsion générées pendant l'utilisation de l'appareil (2).

25. Appareil (2) selon la revendication 24, dans lequel l'élément de transfert de force est une plaque de transfert de force.

26. Appareil (2) selon la revendication 24 ou la revendication 25, dans lequel les moyens de réception sont composés d'un(e) ou de plusieurs trous, fentes, oreilles, encoches ou broches.

27. Appareil (2) selon l'une quelconque des revendications précédentes, et comprenant le dispositif de démontage de joint (14).

28. Appareil (2) selon la revendication 27, dans lequel le dispositif de démontage de joint (14) comprend un élément fileté (68) qui est manoeuvré manuellement lors de l'utilisation de l'appareil (2), et une plaque de pression (72) à une extrémité de l'élément fileté (68), l'élément fileté (68) étant conçu de telle sorte que lorsqu'il est vissé manuellement à travers une partie de montage du dispositif de démontage de joint (14), alors la plaque de pression (72) exerce une pression sur le talon (4) du pneu et démonte le joint.

29. Appareil (2) selon l'une quelconque des revendications précédentes, et comprenant des moyens de commande d'articulation.

30. Appareil (2) selon l'une quelconque des revendications précédentes, dans lequel le cadre de montage (12) comprend deux ou plus de deux sections modulaires interconnectables.
